# FASCICULE DE BREVET EUROPEEN

(11) **EP 3 655 680 B1**
(45) Date de publication et mention de la délivrance du brevet: **19.11.2025**
(21) Numéro de dépôt: 18755513.1
(22) Date de dépôt: 16.07.2018
(51) Int. Cl.: F16H 57/023

(54) **PORTE-SATELLITES POUR UN RÉDUCTEUR DE VITESSE À TRAIN ÉPICYCLOIDAL DE TURBOMACHINE ET PROCÉDÉ D'ASSEMBLAGE D'UN TEL PORTE-SATELLITES**
PLANETENRADTRÄGER FÜR EIN UNTERSETZUNGSGETRIEBE MIT PLANETENGETRIEBE EINER TURBOMASCHINE UND VERFAHREN ZUM ZUSAMMENBAU EINES SOLCHEN PLANETENRADTRÄGERS
PLANET CARRIER FOR A TURBOMACHINE EPICYCLIC SPEED REDUCER AND METHOD OF ASSEMBLING SUCH A PLANET CARRIER

(30) Priorité: 20.07.2017 FR 1756894
(43) Date de publication de la demande: 27.05.2020
(73) Titulaire: Safran Transmission Systems, 92700 Colombes (FR)
(72) Inventeur: DOMBEK, Alexis, Claude, Michel, 77550 Moissy-Cramayel (FR); DI GIOVANNI, Jean-Charles, Michel, Pierre, 77550 Moissy-Cramayel (FR)
(74) Mandataire: Gevers & Orès
(86) Numéro de dépôt international: PCT/FR2018/051808
(87) Numéro de publication internationale: WO 2019/016463

(56) Documents cités:
- WO-A2-2014/099087
- WO-A2-2014/099087
- FR-A1- 3 036 763
- FR-A1- 3 036 763
- US-A1- 2012 028 756
- US-A1- 2012 028 756

## Description

### Domaine de l'invention

La présente invention concerne le domaine des réducteurs de vitesse à train épicycloïdal pour turbomachine en particulier d'aéronef, ainsi que des éléments qui composent un réducteur de ce type tels que des gicleurs, un porte-satellites, un rouet, etc.

### Etat de la technique

L'état de l'art comprend notamment les documents WO-A1-2010/092263, FR-A1-2 987 416, FR-A1-3 036 763, qui constitue la base pour la forme en deux parties de la revendication 1, WO-A2-2014/099087, US-A1-2012/028756 et FR-A1-3 041 054.

Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

Le fonctionnement des réducteurs, en particulier sur des turbomachines avec hélice de soufflante à fort taux de dilution, nécessite un débit d'huile particulièrement important, de l'ordre de 6000 à 7000 litres par heure au décollage, pour assurer la lubrification et le refroidissement de leurs pignons et paliers.

Parmi les réducteurs utilisés, on trouve les réducteurs planétaire et (à train) épicycloïdal qui ont l'avantage d'offrir des taux de réduction importants de la vitesse de rotation dans des encombrements réduits.

Un tel réducteur comprend un pignon planétaire ou pignon central, appelé solaire, une couronne extérieure et des pignons satellites, appelés satellites, qui sont en prise avec le solaire et avec la couronne, le support de l'un de ces trois composants devant être bloqué en rotation pour le fonctionnement du train d'engrenages.

Lorsque le porte-satellites est fixe en rotation, le solaire et la couronne sont menant et mené, respectivement, ou inversement. Le réducteur est alors du type « planétaire ».

Dans le cas inverse, le plus fréquent, d'un réducteur à train épicycloïdal, la couronne extérieure est fixe en rotation et le solaire et le porte-satellites sont menants et menés.

Cependant, ce type de réducteur présente des inconvénients. Une des problématiques est lié à la bonne lubrification des dentures des satellites et du solaire. L'huile doit passer d'une partie fixe du moteur à une partie tournante à haute vitesse. Une fois dans la partie tournante, l'huile n'est plus sous pression. A haute vitesse, il est difficile d'atteindre le solaire avec l'huile à cause de l'effet de centrifugation. Il est alors primordial de rapprocher le gicleur au plus près du solaire. Une autre des problématiques est liée à la complexité du montage.

La présente invention propose un perfectionnement qui apporte une solution simple, efficace et économique à au moins une partie de ces problèmes.

### Exposé de l'invention

Les inconvénients précités et les problèmes associés de l'état de la technique sont résolus par un porte-satellites selon la revendication 1 et un procédé d'assemblage d'un tel porte-satellites selon revendication 9. Des configurations avantageuses sont définies dans les revendications dépendantes.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en coupe axiale d'une turbomachine utilisant l'invention,
- la figure 2 est une vue schématique en coupe axiale d'un réducteur à train épicycloïdal,
- la figure 3 est une vue schématique en perspective d'un mode de réalisation d'un réducteur à train épicycloïdal, avec un porte-satellites selon l'invention,
- la figure 4 est une vue schématique en perspective d'un ensemble comportant un rouet et des gicleurs du réducteur de la figure 3,
- la figure 5 est une vue schématique en perspective d'un porte-satellites selon l'invention du réducteur de la figure 3,
- la figure 6 est une autre vue schématique en perspective du réducteur de la figure 3, et montre une étape d'assemblage,
- la figure 7 est une vue schématique partielle en coupe axiale et à plus grande échelle d'un détail du réducteur de la figure 3, et en particulier d'un gicleur du réducteur, et
- la figure 8 est une vue schématique partielle en coupe transversale et à plus grande échelle d'un détail du réducteur de la figure 3, et en particulier d'un gicleur du réducteur.

### Description détaillée d'un mode de réalisation de l'invention

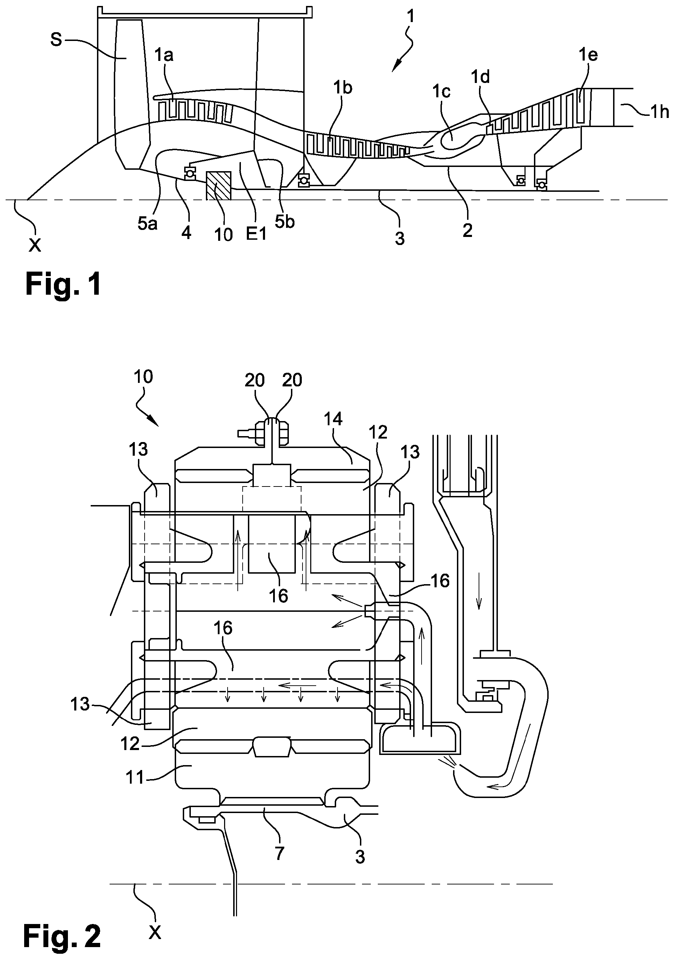

La figure 1 montre une turbomachine 1 qui comporte, de manière classique, une hélice de soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

L'hélice de soufflante S est entraînée par un arbre de soufflante 4 qui est couplé à l'arbre BP 3 au moyen d'un réducteur 10 à train épicycloïdal représenté ici schématiquement.

Le réducteur 10 est positionné dans la partie avant de la turbomachine. Une structure fixe comportant schématiquement, ici, une partie amont 5a et une partie aval 5b est agencée de manière à former un enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

En référence à la figure 2, le réducteur 10 comprend une couronne 14 qui est fixée par l'intermédiaire d'un porte-couronne (non représenté) à la structure fixe 5a, 5b avec des moyens souples agencés pour lui permettre de suivre les mouvements éventuels de l'arbre de soufflante 4, dans certains cas de fonctionnement dégradés par exemple. Dans une architecture planétaire, le porte-couronne est composé d'une partie plus ou moins souple qui entraine la couronne et d'une partie arbée maintenue par des roulements ou des paliers et sur lequel vient se monter la soufflante. Ces moyens de fixation sont connus de l'homme du métier et ne sont pas détaillés ici. Une brève description peut en être trouvée par exemple dans FR-A1-2987416.

Le réducteur 10 embraye d'une part sur l'arbre BP3 par l'intermédiaire de cannelures 7 qui entraînent un pignon d'engrenage planétaire ou solaire 11, et d'autre part sur l'arbre de soufflante 4 qui est attaché à un porte-satellites 13. Classiquement, le solaire 11, dont l'axe de rotation X est confondu avec celui de la turbomachine, entraîne une série de pignons de satellites ou satellites 12, qui sont répartis régulièrement sur la circonférence du réducteur 10. Le nombre de satellites 12 est généralement défini entre trois et six. Les satellites 12 tournent aussi autour de l'axe X de la turbomachine sauf dans le cas d'un planétaire où ils tournent uniquement autour de leurs axes de révolution, en engrenant sur des dentures internes de la couronne 14, qui est fixée à un stator de la turbomachine par l'intermédiaire de brides 20 dans le cas d'un épicycloïdal ou fixé à un rotor de la turbomachine dans le cas d'un planétaire. Chacun des satellites 12 tourne librement autour d'un axe de satellite 16 relié au porte-satellite 13, à l'aide d'un palier qui peut être lisse, comme représenté sur la figure 2, ou un palier à éléments roulants (roulements à billes ou à rouleaux).

La rotation des satellites 12 autour de leur axe de satellite 16, du fait de la coopération de leurs pignons avec les dentures de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

La figure 2 montre l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon lié à la structure fixe de la turbomachine, jusqu'aux pignons et aux paliers à lubrifier. Le dispositif de lubrification comporte classiquement trois parties : une première partie liée à la structure fixe et délivrant l'huile vers les parties tournantes du réducteur 10, un rouet tournant avec le porte-satellites 13 réceptionnant cette huile dans le cas d'un épicycloïdal et d'un distributeur assemblé au porte-satellite, qui sont fixes sur une architecture planétaire, et des circuits de distribution d'huile alimentés en huile par le rouet pour l'acheminer vers les endroits à lubrifier.

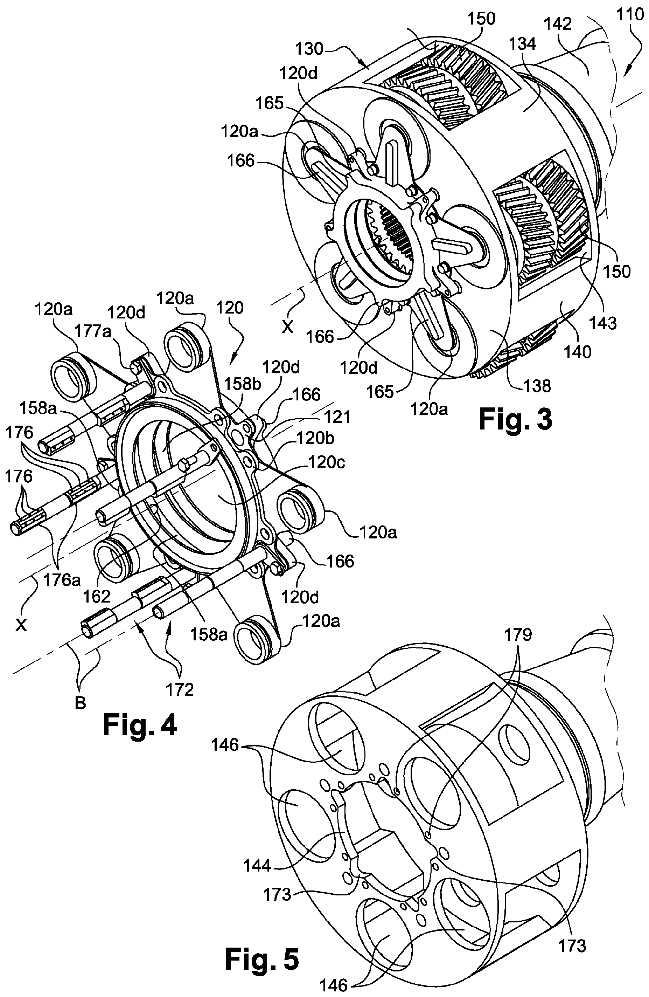

Les figures 3 à 8 illustrent l'exemple de réalisation d'un porte-satellites pour un réducteur 110 selon l'invention.

La référence 130 désigne le porte-satellites du réducteur 110, qui est ici du type monobloc comprenant une partie formant une cage 134 et une partie formant un fût 142. La cage comporte deux parois annulaires 136, 138 coaxiales et reliées à leur périphérie par une paroi cylindrique 140.

La paroi annulaire 136 est solidaire du fût 142 sensiblement cylindrique, partiellement visible, comportant des moyens d'engrènement avec un disque de soufflante de la turbomachine. Les moyens d'accouplement sont par exemple des cannelures longitudinales.

Dans l'exemple représenté, la paroi cylindrique 140 est ajourée et comprend des lumières 143 traversantes en direction radiale permettant le montage des satellites.

La paroi 138 comprend une ouverture centrale 144 (permettant le montage du solaire) centrée sur l'axe X et une série d'orifices 146 régulièrement répartis autour de l'axe X, l'ouverture 144 et les orifices 146 étant traversants en direction axiale (figure 5).

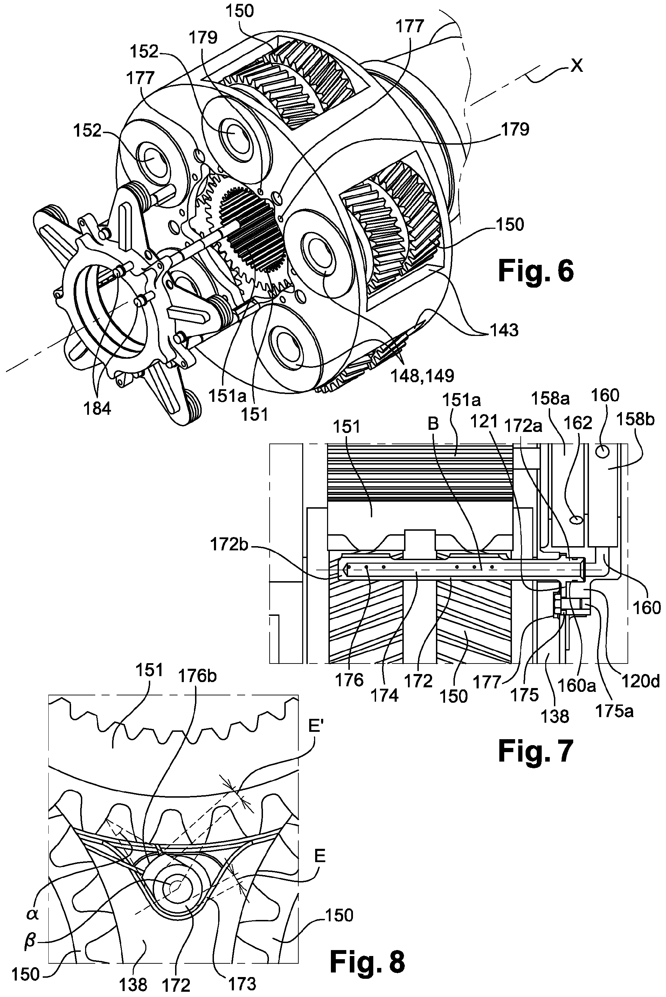

Les orifices 146 servent au montage des axes 148 de rotation des satellites 150. Les axes 148 sont parallèles à l'axe X et sont montés dans la cage 134 par translation axiale en passant par les orifices 146. Ils sont fixés à leurs extrémités longitudinales sur les parois 136, 138, respectivement. Chaque axe 148 est solidaire d'un palier lisse 149 autour duquel est monté le satellite 150 (figure 6). L'axe 148 est creux et comprend une cavité cylindrique interne 152. L'axe 148 et le palier 149 sont traversés par au moins un conduit radial (non visible) qui débouche à son extrémité radialement interne dans la cavité 152, et à son extrémité radialement externe dans une rainure longitudinale de la périphérie du palier en vue de son alimentation en huile.

Comme cela est visible à la figure 6, les satellites 150 montés à rotation sur les axes 148 ont leurs périphéries externes qui traversent en partie les lumières 143 en vue de leur engrènement avec la couronne externe du réducteur destinée à entourer la cage 134.

Les satellites 150 engrènent avec le solaire 151 qui comprend des cannelures rectilignes internes 151a d'accouplement à un autre arbre tel qu'un arbre de turbine.

Un rouet 120 est rapporté et fixé sur la paroi 138, du côté de sa face externe, c'est-à-dire celle qui n'est pas située du côté des satellites 150. Le rouet 120 a pour fonction de lubrifier le réducteur 110 et comprend des moyens de lubrification configurés pour amener du lubrifiant jusqu'à des gicleurs 172 et jusqu'aux axes 148 et paliers 149. L'alimentation en huile des gicleurs permet de lubrifier les dents d'engrènement des satellites 150 et du solaire 151, comme cela sera décrit plus en détail dans ce qui suit en référence à la figure 8.

Le rouet 120 a une forme générale annulaire et comprend des bras 120a en saillie radiale vers l'extérieur, au nombre de cinq dans l'exemple représenté. Le rouet 120 est destiné à être monté coaxialement sur la paroi 138 et comporte une face 120b d'appui et de fixation sur cette paroi.

Le rouet 120 comporte une ouverture centrale 120c délimitée extérieurement par une partie annulaire définissant deux gorges annulaires 158a, 158b coaxiales et disposées axialement l'une à côté de l'autre. Ces gorges 158a, 158b s'étendent autour de l'axe X et débouchent radialement vers l'intérieur. Leur paroi de fond radialement externe comprend des orifices en communication fluidique avec des canaux radiaux 160, d'une part, et des conduits radiaux 162, d'autre part.

Bien que cela ne soit pas représenté, de l'huile est destinée à être projetée dans les gorges 158a, 158b par des moyens d'alimentation en lubrifiant. Ces moyens comprennent en général une série d'injecteurs qui sont disposés autour de l'axe X et traversent les ouvertures 120c, 144. Les injecteurs sont portés par un stator et pulvérisent du lubrifiant radialement vers l'extérieur directement dans les gorges 158a, 158b, qui va ensuite s'écouler dans les canaux 160 et conduits 162.

Dans l'exemple représenté, le nombre de canaux 160 est égal au nombre de conduits 162 qui est égal au nombre d'axes 148 et de satellites 150. Ce nombre est ici de cinq. Les canaux 160 sont régulièrement répartis autour de l'axe X et les conduits 162 sont régulièrement répartis autour de l'axe X, chaque conduit 162 étant disposé entre deux canaux 160 adjacents. Les conduits et canaux sont formés dans des surépaisseurs 165, 166 du rouet (figure 3). Les surépaisseurs 165, 166 dans lesquelles sont formés les canaux 160 et les conduits 162 s'étendent radialement vers l'extérieur depuis la partie dans laquelle sont formées les gorges 158a, 158b. Les surépaisseurs 166 dans lesquelles sont formés les conduits 162 s'étendent sur les bras 120a du rouet. On peut considérer que les surépaisseurs 165 dans lesquelles sont formés les canaux 150 s'étendent sur des doigts 120d en saillie radiale vers l'extérieur du rouet. Les doigts 120d ont une étendue radiale inférieure à celle des bras 120a et sont chacun disposés entre deux bras adjacents.

Chacun des conduits 162 communique à son extrémité radialement externe avec une cavité 152 d'un axe 148 en vue de l'alimentation en lubrifiant de cet axe 148 et du palier 149 associé. Le lubrifiant amené par les conduits 162 est destiné à être injecté dans les cavités 152, puis à s'écouler à travers les conduits précités jusqu'à la périphérie des paliers 149.

Chacun des canaux 160 communique à son extrémité radialement externe avec une extrémité longitudinale d'un gicleur 172 visible notamment aux figures 4 et 6. Les gicleurs 172 ont une forme allongée et s'étendent parallèlement à l'axe X. Leurs axes d'allongement sont notés B. Ils sont au nombre de cinq et régulièrement répartis autour de l'axe X en étant chacun disposés entre deux axes 148 adjacents. Chaque canal 160 communique avec un logement cylindrique 160a d'engagement d'une extrémité longitudinale 172a du gicleur (figure 7). Cette extrémité longitudinale 172a comprend une gorge annulaire externe dans laquelle est montée un joint torique d'étanchéité qui coopère avec la paroi du logement 160a. Chaque gicleur comprend une extrémité longitudinale 172b opposée qui est fermée.

Cette extrémité longitudinale 172a du gicleur forme une entrée de lubrifiant et comprend en outre une patte 175 de fixation au rouet. La patte 175 est formée d'une seule pièce avec le corps sensiblement tubulaire du gicleur, et elle s'étend dans un plan sensiblement perpendiculaire à l'axe longitudinal B de ce corps.

Comme on le voit à la figure 4, la patte 175 est destinée à être appliquée contre la face 120b du rouet 120 ou un renfoncement 121 de cette face. La patte 175 comprend un orifice de passage d'une vis de fixation, qui est vissée dans un trou taraudé 175a de l'extrémité libre du doigt 120d correspondant.

Chaque gicleur 172 comprend une cavité interne longitudinale 174 reliée à l'entrée de lubrifiant précitée et en outre des orifices 176 sensiblement radiaux, répartis sur sa longueur, qui débouchent dans la cavité 174. Le lubrifiant amené par les canaux 160 jusqu'aux gicleurs 172 est destiné à être pulvérisé par les orifices 176 sur les dentures des satellites 150 et du solaire 151 en fonctionnement (cf. figure 8).

Comme on le voit mieux aux figures 4 et 8, les orifices 176 sont formés dans au moins un bossage 176a du corps du gicleur, ce bossage 176a étant en saillie radialement vers l'extérieur.

Dans l'exemple représenté, chaque gicleur 172 comprend deux bossages 176a espacés axialement l'un de l'autre vis-à-vis de l'axe longitudinal B du gicleur. Chaque bossage176a comprend six orifices 176 répartis en deux rangées de trois orifices régulièrement espacés.

Chaque bossage 176a a une étendue angulaire β autour de l'axe d'allongement B du gicleur, qui est inférieure ou égale à 360°, et de préférence à 180° (figure 8). Il a ici en section transversale une forme générale en trapèze dont la petite base 176b est définie par l'extrémité radialement externe du bossage sur laquelle débouchent les orifices (figure 8). Cette petite base 176b a une forme générale incurvée convexe. Les flancs du trapèze forment entre eux un angle α compris entre 0 et 180°, et préférentiellement entre 0 et 90°. En variante, ces flancs pourraient être sensiblement parallèles. Enfin, comme on le voit à la figure 8, la paroi tubulaire a une épaisseur de paroi E et chaque bossage forme une surépaisseur sur cette paroi, qui est égale à E' avec E' supérieure ou égale à E dans l'exemple représenté.

Les orifices 176 sont orientés de façon à ce que l'huile soit orientée vers les dentures à lubrifier. Dans l'exemple représenté, les orifices de chaque rangée de chaque bossage projettent de l'huile sur une denture, ces orifices s'étendant dans un plan non parallèle à celui dans lequel s'étendent les orifices de l'autre rangée. Dans l'exemple représenté, chaque gicleur 172 est configuré pour projeter de l'huile sur le solaire 151 et un des satellites 150.

Chaque gicleur 172 est fixé sur le rouet 120 préalablement au montage et à la fixation du rouet sur le porte-satellites 130. L'extrémité longitudinale de chaque gicleur, formant une entrée de lubrifiant, est engagée dans le logement correspondant du rouet et sa patte 175 est fixée sur le rouet comme évoqué dans ce qui précède. Comme évoqué également dans ce qui précède, la patte 175 peut être logée dans un renfoncement 121 de la face d'appui 120b du rouet (figure 4). Ce renfoncement 121 a une profondeur au moins égale à l'épaisseur de la patte 175 de façon à ce que, lorsque la face d'appui 120b du rouet est appliquée contre la face de réception extérieure de la seconde paroi 138 du porte-satellites, la patte ne gêne pas cet appui. On comprend en outre que les pattes 175 des gicleurs 172 seront emprisonnées entre le porte-satellites et le rouet après l'assemblage de ces éléments. Cela est dû au fait que les pattes des gicleurs sont intercalées entre le rouet et le porte-satellites.

Dans la position montée des gicleurs 172 sur le porte-satellites 130 représentée à la figure 4, les bossages 176a des gicleurs sont orientés plutôt radialement vers l'intérieur. Plus exactement, comme on le voit à la figure 8, un des flancs du bossage de chaque gicleur peut être sensiblement parallèle à un bord périphérique d'une encoche 173 de la paroi 138 du porte-satellites.

Les encoches 173 sont formées sur le bord périphérique interne de l'ouverture 144 du porte-satellites et ont chacune une forme générale triangulaire ou trapézoïdale pour autoriser le montage et le déplacement du corps à bossages de chaque gicleur dans le porte-satellites (figures 5 et 6).

La base du triangle ou la grande base du trapèze de chacune de ces encoches 173 est située au niveau du bord périphérique (figure 8). Les sommets du triangle ou du trapèze sont en outre arrondis.

La figure 6 montre une étape de montage du rouet 120 équipé des gicleurs 172 sur le porte-satellites 130. Le rouet est centré sur le porte-satellites et déplacé vers lui le long de l'axe X, de façon à ce que les gicleurs traversent les encoches 173. La face de réception de la paroi 138 comprend des lamages 177 de forme générale circulaire, qui sont destinés à recevoir les têtes des vis 177a de fixation des gicleurs (figure 7), de façon à autoriser l'appui de la face 120b sur cette face de réception. Les vis 177a sont vissées dans des orifices taraudés du rouet. Dans cette position montée, les gicleurs 172 ont leurs extrémités libres 172b à faible distance axiale de la paroi 136 du porte-satellites.

De part et d'autre de chaque lamage 177, la face de réception de la paroi 138 comprend deux trous taraudés 179 de vissage de vis 184 de fixation du rouet. Ces vis 184 traversent des orifices traversant du rouet, qui sont disposés de part et d'autre de chaque doigt 120d (figures 5 et 6).

Ces vis 184 de fixation du rouet sur le porte-satellite améliorent la transmission des efforts et le désalignement. Avec cette configuration, le rouet devient une pièce structurelle et reprend une partie des efforts du porte-satellite.

Les gains apportés par l'invention sont par exemple :
- la fonction de serrage du rouet et celle des gicleurs sont dissociées, ce qui permet d'avoir moins d'hyperstatisme,
- moins d'hyperstatisme est également obtenu grâce au gicleur monté dans un logement borgne dans le premier mode de réalisation, ce qui permet de se limiter à un seul centrage et un seul joint torique,
- une géométrie d'apport en huile au plus près possible du gicleur,
- un montage isostatique des gicleurs,
- un montage facile des gicleurs dans le rouet puis un montage de l'ensemble sur le porte-satellite,
- un usinage moins nombreux du rouet et des gicleurs par rapport à la technique antérieure,
- des vis de fixation des gicleurs imperdables dans le premier mode de réalisation,
- pas de bouchon aux extrémités libres des gicleurs du premier mode de réalisation,
- moins de contraintes dans le porte-satellite,
- moins de désalignement des dentures,
- des gicleurs légèrement plus courts depuis leurs pattes de fixation, ce qui réduit l'amplitude de leurs oscillations en dynamique.

## Revendications

1. Porte-satellites pour un réducteur (110) de vitesse à train épicycloïdal de turbomachine, ledit porte-satellites comprenant une cage (134) définissant un espace interne de montage d'un solaire central (151) d'axe X de rotation et d'une rangée annulaire de satellites (150) disposés autour de l'axe X et engrenés avec ledit solaire, ledit solaire comportant des moyens d'accouplement (151a) à un premier arbre, ladite cage comportant deux parois annulaires (136, 138), une première (136) desdites parois annulaires étant reliée à un corps sensiblement cylindrique comportant des moyens d'accouplement à un second arbre, et une seconde (138) desdites parois annulaires sur laquelle sont montés un rouet (120) de lubrification et des gicleurs (172) de lubrifiant, le rouet comportant des moyens de lubrification configurés pour amener du lubrifiant jusqu'aux gicleurs et jusqu'à des paliers (149) des satellites (150) dudit réducteur, ledit rouet étant destiné à être monté coaxialement sur ladite seconde paroi annulaire (138), lesdits gicleurs de lubrifiant étant répartis autour dudit axe X et ayant chacun une forme allongée, lesdits gicleurs comportant des premières extrémités longitudinales (172a) de raccordement fluidique auxdits moyens de lubrification dudit rouet, lesdites premières extrémités desdits gicleurs comprenant des moyens (175) de fixation audit rouet, lesdits gicleurs étant configurés pour être fixés audit rouet avant le montage du rouet sur ladite seconde paroi annulaire, **caractérisé en ce que** :
- la première (136) et la seconde (138) parois annulaires de la cage (134) sont sensiblement parallèles et centrées sur ledit axe X, ladite cage (134) comportant en outre une paroi cylindrique (140) reliant lesdites parois annulaires (136, 138) à leur périphérie externe,
- ledit rouet comporte une face (120b) d'appui et de fixation sur cette seconde paroi annulaire (138).

2. Porte-satellites selon la revendication précédente, dans lequel lesdits moyens de fixation de chaque gicleur (172) comprennent une patte (175) de fixation audit rouet (120), ladite patte s'étendant dans un plan sensiblement perpendiculaire à un axe d'allongement du gicleur et étant appliquée et fixée sur ladite face d'appui (120b) dudit rouet ou un renfoncement (121) prévu sur cette face d'appui.

3. Porte-satellites selon la revendication 1 ou 2, dans lequel chaque gicleur (172) comporte, à l'opposé de ladite première extrémité, une seconde extrémité libre (172b).

4. Porte-satellites selon la revendication précédente, dans lequel chaque gicleur (172) comporte une cavité longitudinale interne (174) débouchant à ladite première extrémité (172a) et fermée à ladite seconde extrémité (172b).

5. Porte-satellites selon la revendication 2, dans lequel ladite seconde paroi annulaire (138) comporte une face de réception de ladite face d'appui (120b), ladite face de réception comportant un renfoncement (121) ou lamage de logement de ladite patte (175) de chaque gicleur (172), ou d'un moyen de fixation de cette patte.

6. Porte-satellites selon la revendication 5, dans lequel ladite seconde paroi (138) comporte une rangée annulaire d'orifices ou d'encoches (173) de passage desdits gicleurs (172) lors du montage du rouet (120) équipé des gicleurs sur ladite seconde paroi.

7. Porte-satellites selon la revendication précédente, dans lequel lesdits orifices ou lesdites encoches (173) ont une forme triangulaire ou trapézoïdale.

8. Porte-satellites selon l'une des revendications précédentes, dans lequel lesdits gicleurs (172) sont fixés au rouet (120) par des vis (177a) vissées dans des orifices taraudés du rouet.

9. Procédé d'assemblage d'un porte-satellites selon l'une des revendications précédentes, comprenant les étapes de :
- fixation desdits gicleurs (172) audit rouet (120),
- montage du rouet équipé des gicleurs sur ladite seconde paroi (138).

10. Procédé selon la revendication précédente, dans lequel ledit rouet (120) est monté sur ladite seconde paroi (138) en faisant passer lesdits gicleurs (172) à travers des encoches (173) de forme triangulaire ou trapézoïdale.

11. Procédé selon la revendication 9 ou 10, dans lequel ledit rouet (120) est fixé à ladite seconde paroi (138) par des vis (184) dont deux sont disposés de part et d'autre de chaque gicleur (172) et sont vissées dans des trous taraudés (179) de ladite seconde paroi.

## Patentansprüche

1. Satellitenträger für ein Untersetzungsgetriebe (110) mit Planetengetriebe eines Turbotriebwerks, wobei der Satellitenträger einen Käfig (134) beinhaltet, der einen internen Montageraum eines zentralen Sonnenrads (151) mit Drehachse X und einer ringförmigen Reihe von Satelliten (150), die um die Achse X herum angeordnet sind und mit dem Sonnenrad in Eingriff vorliegen, definiert, wobei das Sonnenrad Kopplungsmittel (151a) mit einer ersten Welle umfasst, wobei der Käfig zwei ringförmige Wände (136, 138) umfasst, wobei eine erste (136) der ringförmigen Wände mit einem im Wesentlichen zylindrischen Körper verbunden ist, der Kopplungsmittel mit einer zweiten Welle umfasst, und eine zweite (138) der ringförmigen Wände, auf der ein Schmierrad (120) und Schmiermitteldüsen (172) montiert sind, wobei das Rad Schmierungungsmittel umfasst, konfiguriert, um das Schmiermittel zu den Düsen und zu den Lagern (149) der Satelliten (150) des Getriebes zu bringen, wobei das Rad dazu bestimmt ist, koaxial an der zweiten ringförmigen Wand (138) montiert zu werden, wobei die Schmiermitteldüsen um die Achse X herum verteilt sind und jeweils eine längliche Form aufweisen, wobei die Düsen erste längsgerichtete Enden (172a) zur fluidischen Verbindung mit den Schmierungungsmitteln des Rads umfassen, wobei die ersten Enden der Düsen Befestigungsmittel (175) an dem Rad beinhalten, wobei die Düsen konfiguriert sind, um vor der Montage des Rads an der zweiten ringförmigen Wand an dem Rad befestigt zu werden, **dadurch gekennzeichnet, dass**:
- die erste (136) und zweite (138) ringförmige Wand im Wesentlichen parallel und an der Achse X zentriert sind, wobei der Käfig (134) des Weiteren eine zylindrische Wand (140) umfasst, die die ringförmigen Wände (136, 138) an deren externen Peripherie verbindet,
- wobei das Rad eine Fläche (120b) zur Anlage und zur Befestigung an dieser ringförmigen Wand (138) umfasst.

2. Satellitenträger nach dem vorstehenden Anspruch, wobei das Befestigungsmittel von jeder Düse (172) eine Lasche (175) zur Befestigung an dem Rad (120) beinhaltet, wobei sich die Lasche in einer ersten Ebene im Wesentlichen senkrecht zu einer Verlängerungsachse der Düse erstreckt und an der Fläche zur Anlage (120b) des Rads oder einer an dieser Fläche zur Anlage vorgesehenen Vertiefung (121) angebracht und befestigt ist.

3. Satellitenträger nach Anspruch 1 oder 2, wobei jede Düse (172) ein dem ersten Ende gegenüberliegendes zweites, freies Ende (172b) umfasst.

4. Satellitenträger nach dem vorstehenden Anspruch, wobei jede Düse (172) einen internen längsgerichteten Hohlraum (174) umfasst, der an dem ersten Ende (172a) mündet und an dem zweiten, freien Ende (172b) geschlossen ist.

5. Satellitenträger nach Anspruch 2, wobei die zweite ringförmige Wand (138) eine Fläche zur Aufnahme der Fläche zur Anlage (120b) umfasst, wobei die Fläche zur Aufnahme eine Aufnahmevertiefung (121) oder -senkung der Lasche (175) jeder Düse (172) oder eines Befestigungsmittels dieser Lasche umfasst.

6. Satellitenträger nach Anspruch 5, wobei die zweite ringförmige Wand (138) eine ringförmige Reihe von Öffnungen oder Kerben (173) zum Durchgang der Düsen (172) bei der Montage des Rads (120), das mit Düsen ausgestattet ist, an der zweiten Wand umfasst.

7. Satellitenträger nach dem vorstehenden Anspruch, wobei die Öffnungen oder die Kerben (173) eine dreieckige oder trapezförmige Form aufweisen.

8. Satellitenträger nach einem der vorstehenden Ansprüche, wobei die Düsen (172) an dem Rad (120) durch Schrauben (117a) befestigt sind, die in mit einem Gewinde versehenen Öffnungen des Rads verschraubt sind.

9. Verfahren zum Zusammenbau eines Satellitenträgers nach einem der vorstehenden Ansprüche, beinhaltend die Schritte:
- Befestigung der Düsen (172) an dem Rad (120),
- Montage des mit Düsen ausgestatteten Rads an der zweiten Wand (138).

10. Verfahren nach dem vorstehenden Anspruch, wobei das Rad (120) an der zweiten Wand (138) montiert wird, indem die Düsen (172) durch die Kerben (173) von dreieckiger oder trapezförmiger Form hindurchgeführt werden.

11. Verfahren nach Anspruch 9 oder 10, wobei das Rad (120) an der zweiten Wand (138) durch Schrauben (184) befestigt wird, von denen zwei beiderseits jeder Düse (172) angeordnet sind und in den mit Gewinde versehenen Löchern (179) der zweiten Wand verschraubt sind.

## Claims

1. Planetary carrier for a planetary carrier speed reducer (110) of a turbine engine, said planetary carrier comprising a cage (134) defining an inner space for mounting a central sun gear (151) of axis of rotation X and an annular row of planetary carriers (150) arranged about the axis X and meshed with said sun gear, said sun gear comprising means for coupling (151a) to a first shaft, said cage comprising two annular walls (136, 138), a first (136) of said annular walls being connected to a substantially cylindrical body comprising means for coupling to a second shaft, and a second (138) of said annular walls on which are mounted a lubrication wheel (120) and lubricant nozzles (172), the wheel comprising lubrication means configured to bring lubricant to the nozzles and to the bearings (149) of the planetary carriers (150) of said reducer, said wheel being intended to be mounted coaxially on said second annular wall (138), said lubricant nozzles being distributed about said axis X and each having an elongate shape, said nozzles comprising first longitudinal ends (172a) fluidly connecting to said means for lubricating said wheel, said first ends of said nozzles comprising means (175) for attaching to said wheel, said nozzles being configured to be attached to said wheel before mounting the wheel on said second annular wall, **characterized in that**:
- the first (136) and second (138) annular walls of the cage (134) are substantially parallel and centred on said axis X, said cage (134) further comprising a cylindrical wall connecting said annular wall (136, 138) at their external periphery;
- said lubrication wheel comprises a bearing and attachment surface (120b) on said second annular wall (138).

2. Planetary carrier according to the preceding claim, wherein said attachment means of each nozzle (172) comprise a tab (175) for attaching to said wheel (120), said tab extending in a plane substantially perpendicular to an axis of elongation of the nozzle and being applied and attached on said bearing surface (120b) of said wheel or a recess (121) provided on this bearing surface.

3. Planetary carrier according to claim 1 or 2, wherein each nozzle (172) comprises, opposite said first end, a second free end (172b).

4. Planetary carrier according to the preceding claim, wherein each nozzle (172) comprises an inner longitudinal cavity (174) opening at said first end (172a) and closed at said second end (172b).

5. Planetary carrier according to claim 2, wherein said second annular wall (138) comprises a surface for receiving said bearing surface (120b), said receiving surface comprising a recess (121) or counterbore for housing said tab (175) of each nozzle (172), or a means for attaching this tab.

6. Planetary carrier according to claim 5, wherein said second wall (138) comprises an annular row of orifices or notches (173) for the passage of said nozzles (172) during the mounting of the wheel (120) equipped with nozzles on said second wall.

7. Planetary carrier according to the preceding claim, wherein said orifices or said notches (173) have a triangular or trapezoidal shape.

8. Planetary carrier according to one of the preceding claims, wherein said nozzles (172) are attached to the wheel (120) by screws (177a) screwed in the tapped orifices of the wheel.

9. Method for assembling a planetary carrier according to one of the preceding claims, comprising the steps of:
- attaching said nozzles (172) to said wheel (120),
- mounting the wheel equipped with nozzles on said second wall (138).

10. Method according to the preceding claim, wherein said wheel (120) is mounted on said second wall (138) by making said nozzles (172) pass through notches (173) of a triangular or trapezoidal shape.

11. Method according to claim 9 or 10, wherein said wheel (120) is attached to said second wall (138) by screws (184) of which two are arranged on either side of each nozzle (172) and are screwed in tapped holes (179) of said second wall.
